# EUROPÄISCHE PATENTANMELDUNG

(11) **EP 0 957 470 A2**
(43) Veröffentlichungstag der Anmeldung: **17.11.1999**
(21) Anmeldenummer: 99201424.1
(22) Anmeldetag: 06.05.1999
(51) Int. Cl.: G10L 3/00

(54) **Verfahren zum Darstellen von aus einem Sprachsignal ermittelten Wörtern**

(30) Priorität: 13.05.1998 DE 19821422
(71) Anmelder: Philips Patentverwaltung GmbH, 22335 Hamburg (DE); Koninklijke Philips Electronics N.V., 5621 BA Eindhoven (NL)
(72) Erfinder: Steinbiss, Volker, Dr., Röntgenstrasse 24, 22335 Hamburg (DE)
(74) Vertreter: Gössmann, Klemens

(57) **Zusammenfassung**

Bei Diktiersystemen, bei denen aus einem gesprochenen Text die einzelnen Wörter des Textes ermittelt und dargestellt werden, treten in einigen dieser ermittelten Wörter Fehler auf, die von einer Bedienungsperson anhand des dargestellten Textes korrigiert werden müssen. Um die am wahrscheinlichsten zu korrigierenden Wörter schneller festzustellen, wird erfindungsgemäß vorgeschlagen, mit den Wörtern Zuverlässigkeitswerte zu ermitteln und die Wörter abhängig von diesen Zuverlässigkeitswerten darzustellen. Diese Darstellung kann beispielsweise durch unterschiedliche Grauwerte, unterschiedliche Farben, unterschiedliche Schrifttypen oder auch durch Unterstreichung erfolgen. Zweckmäßig werden die Zuverlässigkeitswerte mit Schwellwerten verglichen, und nur Wörter, deren Zuverlässigkeitswerte unterhalb des Schwellwertes bzw. unterhalb bestimmter Schwellwerte liegen, werden unterschiedlich zum übrigen Text dargestellt.

## Beschreibung

Die Erfindung betrifft ein Verfahren zum Darstellen von aus einem eingegebenen Sprachsignal ermittelten Wörtern, wobei mit jedem Wort ein Zuverlässigkeitswert gebildet wird, auf einer Anzeigevorrichtung.

Derartige Verfahren sind bei sogenannten Diktiersystemen bekannt, bei denen die aus dem Sprachsignal ermittelten Wörter auf einem Bildschirm dargestellt werden. Ein unmittelbares Ausdrucken des aus dem Diktat ermittelten Textes ist allgemein unzweckmäßig, da bei den derzeit bekannten Systemen noch zu viele Fehler auftreten, die anhand des auf dem Bildschirm dargestellten Textes zunächst korrigiert werden müssen. Dazu muß eine Bedienungsperson den dargestellten Text sorgfältig durchlesen, gegebenenfalls beim Abhören des gesprochenen und gespeicherten Textes, d.h. des Sprachsignals, um vom System falsch erkannte Wörter festzustellen und zu korrigieren. Dies bedeutet einen erheblichen Zeitaufwand, der die Zeitersparnis beim automatischen Umsetzen des gesprochenen Textes in den dargestellten Text teilweise wieder aufhebt.

Aufgabe der Erfindung ist es, ein Verfahren der eingangs angegebenen Art anzugeben, bei dem die Korrektur des aus den dargestellten Wörtern bestehenden Textes einfach und schneller möglich ist.

Diese Aufgabe wird erfindungsgemäß dadurch gelöst, daß die Wörter abhängig vom Zuverlässigkeitswert unterschiedlich dargestellt werden.

Die Ermittlung eines Zuverlässigkeitswertes für aus einem Sprachsignal ermittelten Wörter ist aus ICASSP 1995, Vol.I, Seiten 297 bis 300 bekannt und dient verschiedenen Zwekken, beispielsweise bei Auskunftssystemen, insbesondere solchen mit Dialogführung, zur Entscheidung, ob ein aus dem Sprachsignal ermitteltes Wort akzeptiert oder ganz zurückgewiesen wird. Tatsächlich stellt der Zuverlässigkeitswert auch ein Maß dafür dar, mit welcher Sicherheit ein Wort erkannt worden ist, d.h. insbesondere, wie gut das erkannte Wort mit einem im System gespeicherten akustischen Modell übereinstimmt und gegebenenfalls bei Verwendung eines Sprachmodells, mit welcher Wahrscheinlichkeit dieses Wort an der ermittelten Stelle in einer Wortfolge stehen kann. Der Zuverlässigkeitswert wird nun erfindungsgemäß dafür verwendet, um darzustellen, wie wahrscheinlich ein gesprochenes Wort im Text fehlerhaft ermittelt worden ist. Durch ein optisches Hervorheben von Wörtern mit einem geringen Zuverlässigkeitswert kann eine Bedienungsperson beim Korrigieren schnell feststellen, welche Wörter möglicherweise falsch ermittelt worden sind, um diese schneller korrigieren zu können.

Die vom Zuverlässigkeitswert abhängige Darstellung der Wörter kann auf verschiedene Weise erfolgen. Eine Möglichkeit besteht darin, die Wörter mit einem vom Zuverlässigkeitswert abhängigen Grauwert darzustellen. Eine andere Möglichkeit besteht darin, die Farbe des dargestellten Wortes abhängig vom Zuverlässigkeitswert zu verändern. Auch können die Wörter abhängig vom Zuverlässigkeitswert mit unterschiedlichem Hintergrund, unterschiedlicher Schriftart oder auch unterstrichen dargestellt werden. Unter Schriftart soll allgemein unterschiedliche Schrifttype, Fettdruck, Kursivschrift oder sonstige abweichende Schriftformen verstanden werden. Auch eine Mischung aus einzelnen Möglichkeiten kann verwendet werden, beispielsweise können Wörter mit einem sehr geringen Zuverlässigkeitswert außer mit unterschiedlichem Grauwert oder unterschiedlicher Farbe auch zusätzlich unterstrichen dargestellt werden.

Die unterschiedliche Darstellung kann z.B. proportional mit dem Zuverlässigkeitswert erfolgen. Insbesondere bei der Darstellung in unterschiedlichen Schrifttypen oder unterstrichen ist es jedoch zweckmäßig, daß für den Zuverlässigkeitswert wenigstens ein Schwellwert vorgesehen wird und die Darstellung abhängig vom Unterschreiten des bzw. eines der Schwellwerte erfolgt. Dabei werden dann Wörter, die mit einem ausreichend hohen Zuverlässigkeitswert oberhalb des bzw. des höchsten Schwellwertes ermittelt worden sind, normal dargestellt, während nur Wörter mit einem Zuverlässigkeitswert unterhalb des bzw. eines Schwellwertes abweichend dargestellt werden. Auf diese Weise sind derartige Wörter noch schneller zu erkennen, so daß eine eventuelle Korrektur solcher Wörter noch leichter möglich ist.

Dabei kann es zweckmäßig sein, wenn der Schwellwert bzw. die Schwellwerte veränderbar sind. Eine solche Veränderung der Schwellwerte kann von der Bedienungsperson vorgenommen werden, wenn diese beispielsweise erkennt, daß unnötig viele Wörter, die richtig ermittelt worden sind, abweichend dargestellt werden. Eine solche Veränderung ist aber auch automatisch vom System möglich, wenn viele Wörter, die wegen eines nur leicht verringerten Zuverlässigkeitswertes abweichend dargestellt werden, von der Bedienungsperson doch als richtig gekennzeichnet werden.

Die Korrektur eines dargestellten Textes erfolgt allgemein dadurch, daß ein Cursor nacheinander automatisch auf die aufeinanderfolgenden Wörter des Textes gesetzt wird, gegebenenfalls parallel zu einer Wiedergabe des gespeicherten Sprachsignals, aus dem diese Wörter ermittelt worden sind. Durch z.B. die Betätigung einer Taste kann der Cursor insbesondere bei einem unterschiedlich dargestellten Wort angehalten werden, um dieses Wort zu korrigieren, wenn die Bedienungsperson es als falsch feststellt. Bei Systemen, die aus jedem gesprochenen Wort nicht nur ein Wort ermitteln und darstellen, sondern für einzelne Wörter auch Alternativ-Wörter bzw. insgesamt Alternativ-Sätze, wie aus der EP 0 614 172 A2 bekannt ist, ist es dann zweckmäßig, daß bei solchen Wörtern, bei denen der Cursor angehalten wird, automatisch solche Alternativ-Wörter angezeigt werden, zweckmäßig in der Reihenfolge ihrer Zuverlässigkeitswerte. Dadurch ist eine Korrektur dann noch schneller durchzuführen.

Die Erfindung betrifft ferner eine Anordnung zum Darstellen von aus einem akustisch eingegebenen Sprachsignal ermittelten Wörtern auf einer Anzeigevorrichtung mit einer Verarbeitungsanordnung zum Empfangen des akustischen Sprachsignals und zum Abgeben von Daten, die daraus ermittelte Wörter und zugehörige Zuverlässigkeitswerte angeben, und mit einer Steueranordnung zum Umsetzen der Daten in Steuersignale für die Anzeigevorrichtung.

Um bei einer derartigen Anordnung unter den auf der Anzeigevorrichtung dargestellten Wörtern die möglicherweise falsch ermittelten Wörter schneller zu erkennen, ist die Erfindung weiterhin dadurch gekennzeichnet, daß die die Zuverlässigkeitswerte darstellenden Daten der Steueranordnung zugeführt werden zum Verändern der zu den zugehörigen Wörtern erzeugten Steuersignale für die Anzeigevorrichtung.

Die Daten, die die Buchstaben der ermittelten Wörter repräsentieren, sind allgemein 8-Bit-Datenwörter. Diese werden einer Steueranordnung zugeführt, die die Datenwörter in Steuersignale beispielsweise einer Bildröhre umwandelt, um die Wörter als lesbaren Text darzustellen. Die Steueranordnung erhält dafür zusätzliche Steuerbefehle, die angeben, in welcher Art der Text dargestellt werden soll, beispielsweise in welcher Schriftgröße, welcher Schriftart, welcher Farbe und so weiter. Die der Steueranordnung zugeführten Zuverlässigkeitswerte oder davon abgeleitete Daten werden der Steueranordnung dann als zusätzliche Steuerefehle zum Bestimmen der Darstellung der Wörter zugeführt.

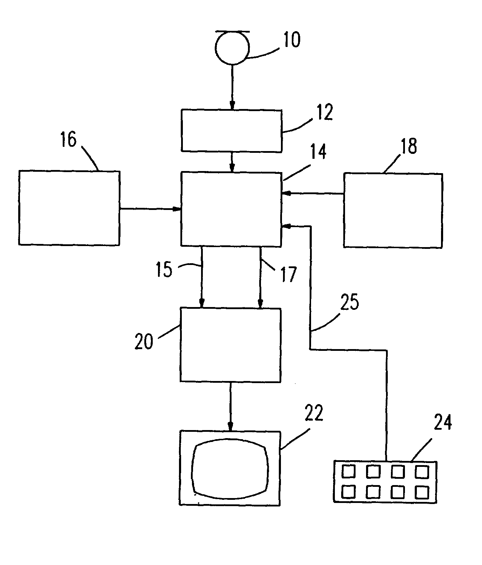

Ein Ausführungsbeispiel der Erfindung wird nachfolgend anhand der Zeichnung erläutert. Darin wird ein akustisch eingegebenes Sprachsignal über ein Mikrofon 10 in ein elektrisches Signal umgesetzt, das einer Vorverarbeitungseinheit 12 zugeführt wird, die das elektrische Signal in eine Folge von das Sprachsignal charakterisierenden Testsignalen umsetzt. Diese Testsignale werden einer Verarbeitungsanordnung 14 zugeführt, die ferner aus einem Speicher 16 Referenzsignale erhält, um einen Vergleich zwischen jedem Testsignal und einer Anzahl Referenzsignale durchzuführen. Aus der Ähnlichkeit bestimmter Folgen von Referenzsignalen mit der Folge von Testsignalen, wobei allgemein aus einem weiteren Speicher 18 Sprachmodellwerte verwendet werden, werden Wörter ermittelt, die durch die Folgen von Referenzsignalen im Speicher 16 bestimmt sind.

Diese Wörter bzw. die Buchstaben dieser Wörter werden aufeinanderfolgend auf der Leitung 15 einer Steueranordnung 20 zugeführt. Diese ist durch Steuerbefehle, die der Steueranordnung vorzugsweise vorher auf nicht dargestellte Weise zugeführt wurden, so eingestellt, daß sie die Datensignale auf der Leitung 15 in Steuersignale für vorzugsweise eine Bildröhre 22 umsetzt.

Außerdem werden beim Vergleich der Referenzsignale aus dem Speicher 16 mit den Testsignalen in der Verarbeitungsanordnung 14 und gegebenenfalls unter Verwendung von Sprachmodellsignalen aus dem Speicher 18 Zuverlässigkeitswerte für die einzelnen Wörter gebildet, die über eine Leitung 17 ebenfalls der Steueranordnung 20 zugeführt werden. Hier arbeiten diese Zuverlässigkeitswerte in ähnlicher Weise wie die bereits erwähnten Steuerbefehle, d.h. sie beeinflussen die Steuereinheit 20 bei der Erzeugung von Steuersignalen für die Bildröhre 22, so daß die Wörter abhängig von den Zuverlässigkeitswerten dargestellt werden. Dabei können die Zuverlässigkeitswerte beispielsweise auch in der Verarbeitungsanordnung 14 mit einem oder mehreren Schwellwerten verglichen werden, so daß auf der Leitung 17 nur Signale übertragen werden, die angeben, ob der Zuverlässigkeitswert des zugehörigen Worts bestimmte Schwellwerte überschreitet bzw. unterschreitet. Über eine Eingabeanordnung 24, beispielsweise eine Tastatur, können der Verarbeitungsanordnung 14 Befehle übermittelt werden, die die Schwellwerte verändern können. Außerdem werden über diese Eingabeanordnung 24 Korrekturwerte für nicht richtig aus dem Sprachsignal ermittelte Wörter eingegeben. Ferner können über diese Eingabeanordnung 24 auch Steuerbefehle übertragen werden, die zu einem bestimmten dargestellten Wort die Darstellung von Alternativ-Wörtern auslösen und eines davon auswählen.

## Patentansprüche

1. Verfahren zum Darstellen von aus einem eingegebenen Sprachsignal ermittelten Wörtern, wobei mit jedem Wort ein Zuverlässigkeitswert gebildet wird, auf einer Anzeigevorrichtung,
dadurch gekennzeichnet,
daß die Wörter abhängig vom Zuverlässigkeitswert unterschiedlich dargestellt werden.

2. Verfahren nach Anspruch 1,
dadurch gekennzeichnet,
daß die Wörter mit einem vom Zuverlässigkeitswert abhängigen Grauwert dargestellt werden.

3. Verfahren nach Anspruch 1,
dadurch gekennzeichnet,
daß die Wörter mit einer vom Zuverlässigkeitswert abhängigen Farbe dargestellt werden.

4. Verfahren nach Anspruch 1,
dadurch gekennzeichnet,
daß die Wörter mit einer vom Zuverlässigkeitswert abhängigen Schriftart dargestellt werden.

5. Verfahren nach Anspruch 1,
dadurch gekennzeichnet,
daß die Wörter abhängig vom Zuverlässigkeitswert unterstrichen dargestellt werden.

6. Verfahren nach Anspruch 1,
dadurch gekennzeichnet,
daß die Wörter mit einem vom Zuverlässigkeitswert abhängigen Hintergrund dargestellt werden.

7. Verfahren nach einem der Ansprüche 1 bis 6,
dadurch gekennzeichnet,
daß für den Zuverlässigkeitswert wenigstens ein Schwellwert vorgesehen wird und die Darstellung abhängig vom Unterschreiten des bzw. eines der Schwellwerte erfolgt.

8. Verfahren nach Anspruch 7,
dadurch gekennzeichnet,
daß der Schwellwert bzw. die Schwellwerte veränderbar sind.

9. Verfahren nach Anspruch 7 oder 8, wobei aus dem Sprachsignal für wenigstens einige Wörter Alternativ-Wörter mit geringerem Zuverlässigkeitswert erzeugt werden,
dadurch gekennzeichnet,
daß bei Eingabe eines Kommandos für ein Wort, dessen Zuverlässigkeitswert wenigstens einen Schwellwert unterschreitet, wenigstens ein Alternativ-Wort angezeigt und mit Eingabe eines weiteren Kommandos anstelle des vorher angezeigten Wortes eingesetzt wird.

10. Anordnung zum Darstellen von aus einem akustisch eingegebenen Sprachsignal ermittelten Wörtern auf einer Anzeigevorrichtung mit
- einer Verarbeitungsanordnung (12, 14, 16, 18) zum Empfangen des akustischen Sprachsignal und zum Abgeben von Daten, die daraus ermittelte Wörter und zugehörige Zuverlässigkeitswerte angeben,
- einer Steueranordnung (20) zum Umsetzen der Daten in Steuersignale für die Anzeigevorrichtung (22),
dadurch gekennzeichnet,
daß die die Zuverlässigkeitswerte darstellenden Daten der Steueranordnung (20) zugeführt werden zum Verändern der zu den zugehörigen Wörtern erzeugten Steuersignale für die Anzeigevorrichtung (22).
